# EUROPÄISCHE PATENTANMELDUNG

(11) **EP 2 156 985 A1**
(43) Veröffentlichungstag der Anmeldung: **24.02.2010**
(21) Anmeldenummer: 08014484.3
(22) Anmeldetag: 14.08.2008
(51) Int. Cl.: B60Q 3/02, F21V 5/00

(54) **Beleuchtungseinheit für eine Innenraumbeleuchtung eines Kraftfahrzeugs**

(71) Anmelder: Delphi Technologies, Inc., Troy, Michigan 48007 (US)
(72) Erfinder: Leng, Peter, 55128 Mainz (DE)
(74) Vertreter: Becker, Bernd

(57) **Zusammenfassung**

Eine Beleuchtungseinheit (1) für eine Innenraumbeleuchtung eines Kraftfahrzeugs umfasst mindestens eine in einem Gehäuse (2) angeordnete LED (3a) als Lichtquelle sowie eine Streuscheibe (4) zur Erzielung einer gewünschten Lichtverteilung. Um ein und dieselbe Beleuchtungseinheit (1) variabel einsetzen zu können, ist die Streuscheibe (4) ein Durchlichthologramm (6).

## Beschreibung

Die Erfindung bezieht sich auf eine Beleuchtungseinheit für eine Innenraumbeleuchtung eines Kraftfahrzeugs mit mindestens einer in einem Gehäuse angeordneten LED als Lichtquelle und mit einer Streuscheibe zur Erzielung einer gewünschten Lichtverteilung.

Kraftfahrzeuge verfügen über eine Innenraumbeleuchtung, um beispielsweise bei Dunkelheit und im geparkten Zustand eine Straßenkarte bei eingeschalteter Innenraumbeleuchtung lesen zu können. Hierfür ist in einem vorderen und/oder mittigen Bereich am Dachhimmel eine Beleuchtungseinheit angeordnet, die üblicherweise manuell ein- und ausgeschaltet wird. Dabei kann entweder eine helle Innenraumbeleuchtung für den gesamten Innenraum aktiviert werden, die einen großen Lichtkegel aufweist und/oder vorzugsweise zwei getrennte Lichtquellen, um getrennt für die Fahrer- und Beifahrerseite jeweils eine spotartige Beleuchtung zu erzeugen, wodurch beispielsweise ein Beifahrer während der Fahrt eine Straßenkarte lesen kann. Besonders im Fond können zusätzliche, ebenfalls stark fokussierte Leseleuchten vorgesehen sein, so dass ein Mitfahrer lesen kann, ohne durch den für ihn gedachten Lichtstrahl, der insbesondere auch ausrichtbar ist, den Fahrer zu blenden. Besonders bei Großraumlimousinen sind zusätzliche Innenraumbeleuchtungen im Bereich des hinteren Dachhimmels vorgesehen. Des Weiteren sind zusätzliche Lichtquellen in einem Koffer- bzw. Laderaumraum eines Kraftfahrzeugs angeordnet, die beispielsweise beim Öffnen einer Heckklappe und gegebenenfalls eingeschalteter Innenraumbeleuchtung ebenfalls aktiviert werden.

Die US 2003/0063477 A1 beschreibt eine Beleuchtungseinheit einer Innenraumbeleuchtung eines Kraftfahrzeugs mit einer in einem Gehäuse angeordneten LED sowie einer im Gehäuse integrierten elektronischen Steuerung. Um die Lichtquelle im Notfall auch separat nutzen zu können, ist diese lösbar im Gehäuse angeordnet, was eine Minimierung der Abmessungen des Gehäuses praktisch ausschließt.

Weiterhin offenbart die US 2006/0039154 A1 eine Lichtquelle mit einer vorgesetzten Streuscheibe, wobei die Streuscheibe derart ausgebildet ist, dass diese mit einem reflektierenden Material in einem bestimmten Muster versehen ist, wodurch in den Bereichen des reflektierenden Materials eine stärkere Reflektion bzw. Ablenkung der von der Lichtquelle ausgehenden Lichtstrahlen erfolgt, um derart einen Lichtkegel gewünschter Formgebung zu erhalten. Beispielsweise kann das reflektierende Material in gitterförmigen Mustern aufgetragen sein. Dies erfordert zum Aufbringen des reflektierenden Materials jedoch einen erheblichen Aufwand bei der Herstellung.

Die bekannten Beleuchtungseinheiten zur Innenraumbeleuchtung eines Kraftfahrzeugs sind insofern nachteilig, als mit ihnen jeweils nur eine einzige Form eines Lichtkegels erzeugbar ist, was für eine allgemeine Beleuchtung und eine Spotbeleuchtung mehrere Beleuchtungseinheiten erfordert. Zudem können die Einbaumaße nicht beliebig verkleinert werden, da vor allem bei der Verwendung von Glühbirnen als Lichtquellen die Abführung der entstehenden Wärme bei zu geringen Einbaumaßen nicht mehr möglich ist.

Es ist Aufgabe der Erfindung, eine Beleuchtungseinheit der eingangs genannten Art zu schaffen, die sowohl über geringe Einbaumaße verfügt als auch variabel einsetzbar ist.

Erfindungsgemäß wird die Aufgabe dadurch gelöst, dass die Streuscheibe ein Durchlichthologramm ist.

Bei einer derart ausgebildeten Beleuchtungseinheit durchstrahlt das von der LED ausgehende Licht das Durchlichthologramm oder Transmissionshologramm, wodurch beim Hindurchtreten des Lichts durch das Durchlichthologramm in Strahlrichtung gesehen hinter diesem, also im Innenraum des Kraftfahrzeugs, eine Objektwelle bzw. das eigentliche Bild erzeugt wird. Selbstverständlich ist hierfür die Streuscheibe mit einem entsprechenden holographischen Muster versehen und für das Licht der LED transparent. Beispielsweise kann die Streuscheibe aus einem transparenten Kunststoff hergestellt sein.

Der Vorteil der Erfindung besteht darin, dass mit Hilfe des Durchlichthologramms eine gewünschte Lichtverteilung des aus der Beleuchtungseinheit austretenden Lichtkegels erhalten wird. So kann durch geeignete Wahl des Durchlichthologramms bzw. der Streuscheibe ein gebündelter Lichtkegel für die Funktion einer Leselampe oder ein breiter Lichtkegel zur Ausleuchtung des gesamten Innenraums des Kraftfahrzeugs erhalten werden. Hierfür muss lediglich die Streuscheibe ausgewechselt werden, um mit der gleichen Beleuchtungseinheit verschiedene Funktionalitäten zu realisieren. Somit sind der Aufwand sowie die Bevorratung bei der Herstellung des Kraftfahrzeugs erheblich reduziert.

Vorzugsweise wird als LED eine Weißlicht-LED eingesetzt, wobei in diesem Fall die Streuscheibe bevorzugt ein an sich bekanntes Weißlichthologramm ist. Entsprechende LEDs sind im Stand der Technik bekannt und bieten eine hohe Flussdichte des Lichts von beispielsweise 65 Lumen bei einer Helligkeit von mehr als 7 Cd/m². Derartige Weißlicht-LEDs sind üblicherweise derart aufgebaut, dass sie gelbes und blaues Licht gemeinsam aussenden, das durch Überlagerung als weißes Licht erscheint.

Um mit der Beleuchtungseinheit verschiedene Beleuchtungsarten zu realisieren, sind in der Beleuchtungseinheit mehrere LEDs vorgesehen, insbesondere drei. Die drei LEDs können dabei jeweils Licht gleicher Farbe emittieren oder unterschiedliche Lichtfarben, je nach gewünschter Anwendung.

Nach einer Weiterbildung sind die drei LEDs entweder in einer Reihe oder Linie nebeneinander oder relativ zur mittleren LED geneigt ausgerichtet. Bei der geneigten Anordnung sind die beiden äußeren LEDs vorzugsweise jeweils um 25° oder 45° zur mittleren LED verschwenkt, um derart als Leseleuchte oder Spotleuchte, beispielsweise für die Fahrer- und Beifahrerseite, zu dienen. Selbstverständlich ist die Streuscheibe bzw. das Durchlichthologramm derart ausgebildet, dass das von jeder LED ausgehende und durch die Streuscheibe hindurchtretende Licht in gewünschter Art gebrochen bzw. reflektiert wird, um einen spezifischen Lichtkegel zu erhalten. Bei der geneigten Anordnung wird das von den äußeren, geneigten LEDs ausgehende Licht vorzugsweise derart ausgerichtet, dass es jeweils als Leselicht für die Fahrer- und Beifahrerseite dient. Das von der mittleren LED ausgehende Licht fungiert als normale Innenraumbeleuchtung. Hierzu kann die Beleuchtungseinheit in einem mittigen Bereich des Dachhimmels im Innenraum des Kraftfahrzeugs angeordnet werden.

Zur Reduzierung der Einbaumaße verfügt die Beleuchtungseinheit über ein flaches Gehäuse mit einem geringen Abstand zwischen der oder den LEDs und der Streuscheibe. Durch die holographischen Eigenschaften der Streuscheibe ist es dennoch möglich, das von der LED ausgehende Licht in gewünschter Weise trotz des geringen Abstands auszustrahlen. Somit kann die Beleuchtungseinheit für verschiedene Zwecke an praktisch beliebigen Einbaupositionen durch bloßen Austausch der Streuscheibe eingesetzt werden.

Zur Wärmeabführung der thermischen Energie, die in der LED anfällt, ist bevorzugt eine Wärmeableitung in der Beleuchtungseinheit vorgesehen, die in unmittelbarem thermischen Kontakt mit der LED steht. Beispielsweise kann die Wärmeableitung in Form eines Kühlblechs ausgeführt sein.

In weiterer Ausgestaltung ist zur einfachen Herstellung der Streuscheibe, die als Durchlichthologramm dient, diese in einem Spritzgussverfahren aus einem hierfür geeigneten Kunststoffmaterial hergestellt. Ein gewünschtes Durchlichthologramm, beispielsweise für die Beleuchtungseinheit mit drei LEDs mit zwei Leseleuchten und einer Innenraumbeleuchtung, kann mit einem Computer berechnet werden. Ein entsprechendes Muster wird dann lithographisch auf eine metallische Matrize übertragen, um nachfolgend mit Hilfe der Matrize durch Aufspritzen von Kunststoffmaterial die eigentliche Streuscheibe zu erhalten. Die Herstellung derartiger LEDs wird üblicherweise in großer Zahl auf einem Wafer vorgenommen, wobei die Ausstattung der LED beispielsweise mit einer Wärmeableitung sowie den elektrischen Anschlüssen in einem photolithographischen Verfahren erfolgt. Dabei kann die Streuscheibe selbst als zusätzliche Beschichtung auf den Wafer aus einem geeigneten Kunststoffmaterial mit dem gewünschten holographischen Muster aufgetragen werden.

Es ist ersichtlich, eine derartige Beleuchtungseinheit nicht nur zur Beleuchtung eines Innenraums eines Kraftfahrzeugs, sondern auch auf allen anderen Gebieten der Technik zu verwenden. Beispielsweise kann eine derartige Beleuchtungseinheit auch als Fahr- oder Abblendlicht oder als Nebelleuchte am Kraftfahrzeug eingesetzt werden.

Es versteht sich, dass die vorstehend genannten und nachfolgend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispiels mit Bezugnahme auf die zugehörigen Zeichnungen näher erläutert. Es zeigt:

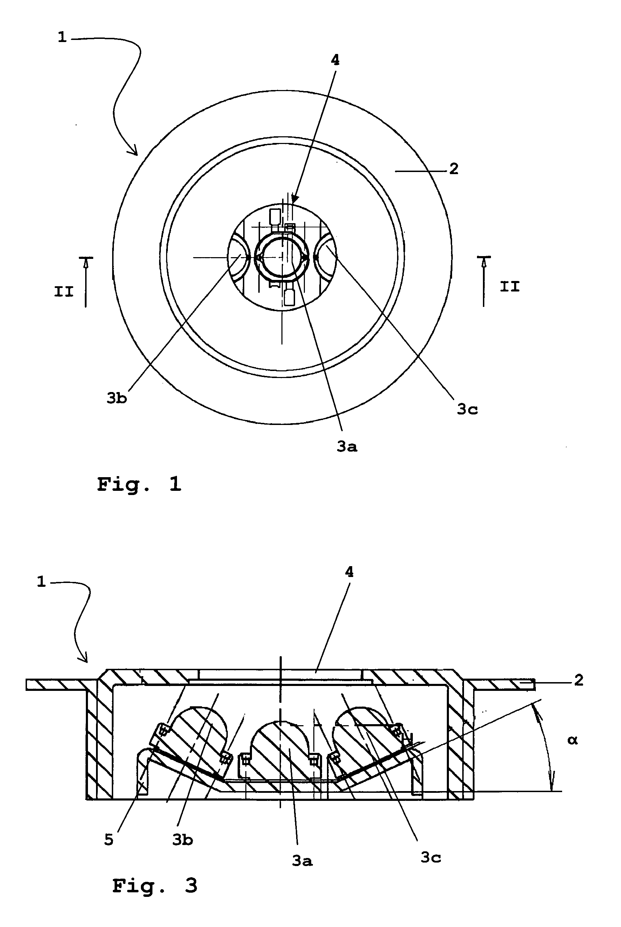

- Fig.1: eine Draufsicht auf eine erfindungsgemäße Beleuchtungseinheit,
- Fig.2: ein Schnitt durch die Beleuchtungseinheit nach Fig. 1 gemäß der Linie II-II und
- Fig.3: eine Teildarstellung eines Durchlichthologramms der Beleuchtungseinheit nach Fig. 1.

Die zur Innenraumbeleuchtung eines Kraftfahrzeugs einsetzbare Beleuchtungseinheit 1 umfasst ein Gehäuse 2, drei LEDs 3a, 3b, 3c und eine Streuscheibe 4 zur Erzielung eines gewünschten Lichtkegels. Die beiden äußeren LEDs 3b, 3c sind relativ zur mittleren LED 3a um einen Winkel α geneigt, der beispielsweise 25° oder 45° beträgt. Prinzipiell können die drei LEDs 3a, 3b, 3c auch in einer geraden Linie angeordnet sein.

Das von den LEDs 3 ausgehende Licht tritt durch die Streuscheibe 4 hindurch, die als Durchlichthologramm 6 ausgebildet ist. Dadurch wird auch bei geringem Abstand zwischen Streuscheibe 4 und den LEDs 3a, 3b, 3c ein gewünschter Lichtkegel erhalten. Beispielsweise kann mit den beiden äußeren LEDs 3b, 3c ein gebündelter Lichtkegel oder ein Lichtspot erhalten werden, um als Leseleuchte für den Fahrer- oder Beifahrer zu dienen. Die entsprechende Ansteuerung erfolgt in an sich bekannter Weise über Betätigungselemente, die der Beleuchtungseinheit 1 zugeordnet sind. Die mittige LED 3a kann zur normalen Ausleuchtung des Innenraums des Kraftfahrzeugs dienen und strahlt hierzu einen breiten Lichtkegel aus. Die LEDs 3a, 3b, 3c sind beispielsweise Weißlicht-LEDs, in denen gelbes und blaues Licht emittiert wird, das sich zu weißem Licht überlagert. Zur Wärmeabführung ist eine Wärmeableitung 5 vorgesehen, die in thermischem Kontakt mit den LEDs 3a, 3b, 3c steht.

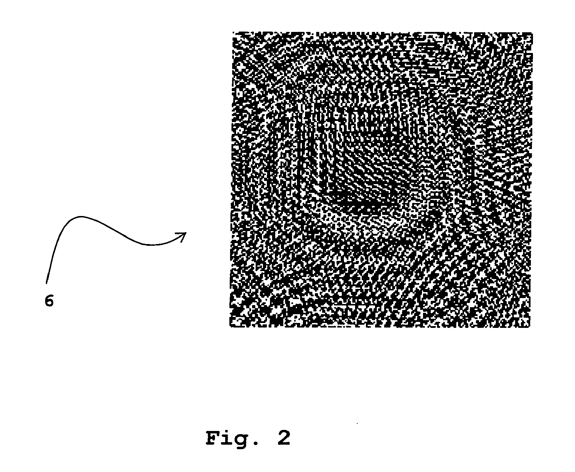

Das Durchlichthologramm 6 gemäß Fig. 2 kann mit Hilfe eines Computers in Abhängigkeit des von einer der LEDs 3a, 3b, 3c ausgehenden Lichts, des Abstands zur Streuscheibe 4 sowie dem gewünschten Lichtkegel errechnet werden. Ein solches Durchlichthologramm 6 kann durch das Spritzgießen einer Streuscheibe 4 aus einem geeigneten Kunststoffmaterial realisiert werden.

## Patentansprüche

1. Beleuchtungseinheit (1) für eine Innenraumbeleuchtung eines Kraftfahrzeugs mit mindestens einer in einem Gehäuse (2) angeordneten LED (3a) als Lichtquelle und mit einer Streuscheibe (4) zur Erzielung einer gewünschten Lichtverteilung, **dadurch gekennzeichnet, dass** die Streuscheibe (4) ein Durchlichthologramm (6) ist.

2. Beleuchtungseinheit nach Anspruch 1, **dadurch gekennzeichnet, dass** die LED (3a) eine Weißlicht-LED ist.

3. Beleuchtungseinheit nach Anspruch 1 oder 2, **dadurch gekennzeichnet, dass** drei LEDs (3a, 3b, 3c) in der Beleuchtungseinheit (1) vorgesehen sind.

4. Beleuchtungseinheit nach Anspruch 3, **dadurch gekennzeichnet, dass** die drei LEDs (3a, 3b, 3c) in einer Reihe nebeneinander oder relativ zur mittleren LED (3a) geneigt angeordnet sind, insbesondere um 25° oder 45°.

5. Beleuchtungseinheit nach einem der Ansprüche 1 bis 4, **dadurch gekennzeichnet, dass** das Gehäuse (2) flach mit einem geringen Abstand zwischen der LED (3a) und der Streuscheibe (4) ausgeführt ist.

6. Beleuchtungseinheit nach einem der Ansprüche 1 bis 5, **dadurch gekennzeichnet, dass** in der Beleuchtungseinheit (1) eine Wärmeableitung (5) vorhanden ist.

7. Beleuchtungseinheit nach einem der Ansprüche 1 bis 6, **dadurch gekennzeichnet, dass** die Streuscheibe (4) in einem Spritzgussverfahren hergestellt ist.
